# EUROPEAN PATENT SPECIFICATION

(11) **EP 3 670 934 B1**
(45) Date of publication and mention of the grant of the patent: **01.03.2023**
(21) Application number: 18213137.5
(22) Date of filing: 17.12.2018
(51) Int. Cl.: F16B 15/00, F16L 59/12, F24F 13/02

(54) **FASTENING ELEMENT FOR SUPPORTING AND/OR FIXING INSULATION ELEMENTS**
BEFESTIGUNGSELEMENT ZUM STÜTZEN UND/ODER BEFESTIGEN VON ISOLIERUNGSELEMENTEN
ÉLÉMENT DE FIXATION POUR SUPPORTER ET/OU FIXER DES ÉLÉMENTS D'ISOLATION

(43) Date of publication of application: 24.06.2020
(73) Proprietor: ROCKWOOL A/S, 2640 Hedehusene (DK)
(72) Inventor: Duisters, Rob, 5591 TE Heeze (NL)
(74) Representative: Brinkmann & Partner

(56) References cited:
- CH-A2- 710 087
- DE-A1- 3 604 767
- DE-A1- 19 513 206
- DE-T2- 69 204 897
- US-A- 3 246 439
- US-A- 4 855 562
- US-A- 5 435 679

## Description

The invention relates to a fastening element for supporting and/or fixing insulation elements, especially made of mineral wool, preferably stone wool, to a ventilation duct or pipe comprising a pin having a base disk at a first end and a tip at a second end and a washer being connectable to the tip of the pin.

The background of the invention are fastening elements also called air duct insulation pins to be adhered to a ventilation duct or pipe and fastening insulation material to the outer surface of such duct or pipe. A general example of such arrangement is known from WO 2014/026000 A1. Said document relates to a foldable pin and base washer combination capable of being connected to a duct surface.

Such pins or fastening elements are secured to the duct or other surfaces by welding, a selfadhesive strip or glue/adhesive. Nowadays, various types of metal pins for welding or adhesively connecting to a duct surface with or without separate caps or washers are well known. They suffer from their poor thermal performance, forming thermal bridges that are inacceptable when it comes to condensation prevention.

An insulation material such as factory made mineral wool (MW) will subsequently be slid over and retained by a washer or cap. In matters of insulation of ducts or pipes, where cooled media are rooted and the dew point temperature of ambient air is within the insulation system, in order to prevent condensation on the pipe or duct, the insulation system must be airtight, e.g. be provided with a vapor barrier. This vapor barrier must be tightly enclosed to the entire insulation layer and all penetrations of the system, e.g. fasteners like the mentioned pins need to be sealed effectively.

The same applies to any fastening elements being part of such system. Today, typically the pinhead or washer is taped in order to seal it but this is time consuming and error-prone.

For example the before mentioned WO 2014/026000 A1 discloses a foldable pin and base washer combination capable of being connected to a surface of a duct by welding or by an adhesive. In the unfolded position, the combination meets the preferred industry standard for securing a sheet or batt of insulation to a wall of an HVAC duct, and in the folded position the combination can be more efficiently and compactly packaged and shipped. The pin is preferably made from an electrically conductive material, preferably a metal, but the base washer can be formed of a metal or a rigid polymer material.

This well-known convertible insulation holder pin does not avoid the before mentioned disadvantages of the before mentioned prior art especially with respect to the insulation of ducts or pipes, while cooled media are rooted and the dew point temperature of the ambient air is within the insulation system, in order to prevent condensation on the pipe or duct.

US 4 855 562 A shows a fastening element for fixing insulation elements to a ventilation duct. This well-known fastening element comprises a pin having a base disk at a first end and a tip at a second end and a washer. The washer is sleeved over the pin such that the washer lies subjacent the basic disk. As can be learned from US 4 855 562 A this fastening element is used to be fixed with the tip of the pin to the duct by welding. Additionally, the fastening element according to US 4 855 562 A has a layer of heat activated material being arranged on the undersurface of the washer to be in contact with the insulation element and to function, to activate or melt a layer of adhesive and bond the adhesive to the foil during the welding procedure.

US 5 435 679 A discloses a piercing grommet which pierces in insulation blanked and comprises a mounting bracket which clips onto an aircraft stringer by the snapping-on action of the installer mechanic; as standoff disk support member having a tool piercing portion which is seated on projection portion of mounting bracket; and an apertured disk member which is coaxially disposed about said tool piercing portion and snap-fitted down by the installation mechanic onto said standoff disk support member. An adhesive tape is arranged on the upper side of the standoff disk support member to which the removable tool piercing portion is fixed. Such adhesive tape forms a seal with the insulation blanket.

Finally, DE 36 04 767 A1 discloses a fastening element for fixing foils to insulation elements. This before known fastening element has a base disk with a pin erecting from the middle of the base disk and a cap to be connected to the end of the pin opposite to the base disk. The cap has an underside equipped with a layer of a sealant, which seals the area between the cap and a foil covering the insulation element.

The cap has no aperture into which a sealing element is inserted.

Therefore, it is an **object** of the invention to propose a fastening element for supporting and/or fixing insulation elements to be adhered to a ventilation duct or pipe and fastening insulation material to the outer surface of such duct or pipe without the need of additional sealing measures of the fastening element and/or the insulation.

Furthermore, it is an **object** of the present invention to reduce the risk of condensation on the pipe or duct by a respective fastening element of the non-metal type, i.e. a material of low thermal conductivity.

In order to improve the fastening element for supporting and/or fixing insulation elements the invention proposes a sealing element as a ring seal between the washer and a surface of the insulation element and/or between the pin and a surface of the insulation element and/or between the washer and the pin whereby the washer has a trapezoidal or circular cross section and a first aperture, into which the sealing element is inserted. The invention therefore proposes a fastening element with an integrated sealing as a ring seal between the washer and the insulation surface respectively the vapor barrier on the one hand, and/or a seal between the pin or shaft of the fastener and the pinhead or washer on the other hand.

The fastening element according to the present invention comprises two parts, i. e. a pin or shaft with a base disk as a bottom plate for adhesively connecting to a duct surface, and a washer which opening fits the pin or shaft and which retains the insulation in place.

The washer has a trapezoidal or circular cross section and a first aperture, into which the sealing element is inserted. The aperture is opened to the insulation to be retained in place and the sealing element is arranged so that the sealing element is in contact with the outer surface of the insulation and the outer region of the washer being oriented to the insulation which normally is covered by a foil, especially a metal foil, preferably made of aluminum.

According to an embodiment of the invention the washer has the shape of a spherical segment or of a truncated cone, whereby the washer is open in the area of the larger diameter of the spherical segment or of the truncated cone. Preferably pin and washer are made of a material of low thermal conductivity, e.g. of a synthetic polymer to avoid thermal bridges between the duct and the outside of the insulation. The pin and washer, respectively the fastening element according to the present invention preferably is made of a synthetic polymer material like e.g. Polyamide (Nylon) optionally glass fibre reinforced, Polyethylene, Polypropylene, PEEK (Polyether ether ketone) or others. Mostly the thermoplastic type of polymer will be used to produce parts by known polymer processing techniques, like injection molding, extrusion etc.

More preferably, the sealing element has an outer shape according to an inner shape of the washer and a central aperture for the pin. The sealing element is formed as a ring seal or ring packing and may have a central aperture with a diameter being approximately the diameter of the washer (D) or being the diameter of the pin (d). According to this, the diameter of the sealing element may be approximately equal to the diameter of the pin thereby sealing the pin penetrating the sealing element in that the sealing element is in contact with the outer surface of the pin. On the other hand, it may be sufficient if the sealing element is in contact with the outer surface of the insulation element in the area of the washer.

Finally, according to the last embodiment, the sealing element can additionally be used to seal the pin in that the sealing element is in close contact to the outer surface of the pin.

According to a further development of the fastening element the washer has a coupling device, especially a hollow cylinder for the connection with the pin. The hollow cylinder can have for example three or four slits being arranged parallel to the longitudinal axis of the hollow cylinder so that the parts of the hollow cylinder being interrupted by the slits have a certain elasticity which allows to use a pin having a slightly thicker diameter than the hollow cylinder so that the washer can be snapped to the pin. Additionally the pin can have at least one annular groove into which tongs preferably at the free end of the hollow cylinder can snap in to fix the washer to the pin. Preferably, the pin has more than one annular groove so that the washer can be fixed in different positions to the pin which makes it possible to use a pin with a definite length together with insulation elements of different thicknesses. Depending on the thickness of the insulation the washer can be moved along the pin into a position in which the tongs snap into an annular groove of the pin thereby fixing the insulation to the duct and sealing the outer surface of the insulation by bringing the sealing element into contact with the outer surface or the insulation or with the outer surface of the pin.

A further embodiment of the invention is characterized in that the washer is closed with a membrane thereby forming a hollow space being filled with a liquid or paste-like sealant, whereby the membrane is at least penetrable by the pin and whereby an area of the penetration is sealed with the sealant between the membrane and the pin. By fixing the washer to the pin the tip of the pin penetrates the membrane and activates the liquid or paste-like sealant which for example hardens by getting into contact with oxygen so that the penetrated membrane is sealed by the liquid or paste-like sealant around the pin.

Especially in relation to this embodiment it has been found that a sharp or pointed tip of the pin is of advantage, which makes it easier to penetrate the membrane. Furthermore, the sharp tip has advantages with respect to an embodiment of the invention whereby the washer has a coupling device, especially a hollow cylinder into which the pin is inserted, too.

Additionally or alternatively at least the tip of the pin is made of a material, e. g. an elastomer, which is deformable when mechanically, physically and/or chemically influenced. According to this embodiment the tip is made of a material, which deforms to become or can be used as a sealant.

Besides such elastomer an encapsulated adhesive or a thermal setting resin can be used. In order to activate such a resin or adhesive it might be necessary to open the capsule for the adhesive just by for example the tongs of the hollow cylinder or by applying heat to the pin after the washer is fixed to the pin. Other embodiments are possible.

Preferably, the sealant inside the washer encapsulated by the membrane is a glue or an adhesive, preferably activatable mechanically, physically and/or chemically. The sealant can be activated mechanically by inserting the tip of the pin into the membrane. It can be activated physically by applying heat to a thermal setting adhesive or by oxygen getting into contact with the adhesive after opening the membrane. The sealant can be activated chemically by using for example a chemical product at the tip of the pin, which is brought into contact with the sealant inside the washer by penetrating the membrane.

Preferably, the washer and the sealing element are formed integrally which means that the washer and the sealing element is one part prepared to be used with the pin. The sealing is factory provided in the washer to avoid errors by using the fastening element for supporting and/or fixing insulation elements.

An additionally provided cap can be attached to the tip of the pin, thereby connecting the tip of the pin with a washer having an aperture into which the cap is inserted whereby a friction force between an outside of the cap and an inner wall of the aperture is provided. According to this embodiment the pin runs through an opening of the washer and is arranged in a position in which the washer is in contact with the outside of the insulation. Afterwards the cap is imposed on the tip of the pin fixing the washer in the pre-determined position fulfilling the function of the sealing. Additionally, the cap can be filled with a glue or adhesive and sealed by a membrane penetrated by the tip of the pin. By penetrating the membrane the glue or the adhesive inside the cap can be activated to adhesively fix the cap to the tip of the pin thereby fixing the washer in the pre-determined position.

Further descriptions of the invention and its various embodiments are shown in the accompanying drawings and the further detailed description of the drawings.
- Figure 1:: shows a first embodiment of a fastening element in a side view;
- Figure 2:: shows a washer of the fastening element according to claim 1 in a perspective view as a sectional view;
- Figure 3:: a first embodiment of a pin of the fastening element according to figure 1;
- Figure 4:: a second embodiment of the pin of the fastening element according to figure 1;
- Figure 5:: a washer for a fastening element according to figure 1 in a sectional view;
- Figure 6:: a further embodiment of a washer for a fastening element according to figure°1 in a sectional view;
- Figure 7:: a further embodiment of a fastening element in a sectional view;
- Figure 8:: a further embodiment of a fastening element in a detailed sectional view and
- Figure 9:: a further embodiment of a fastening element in detailed sectional view.

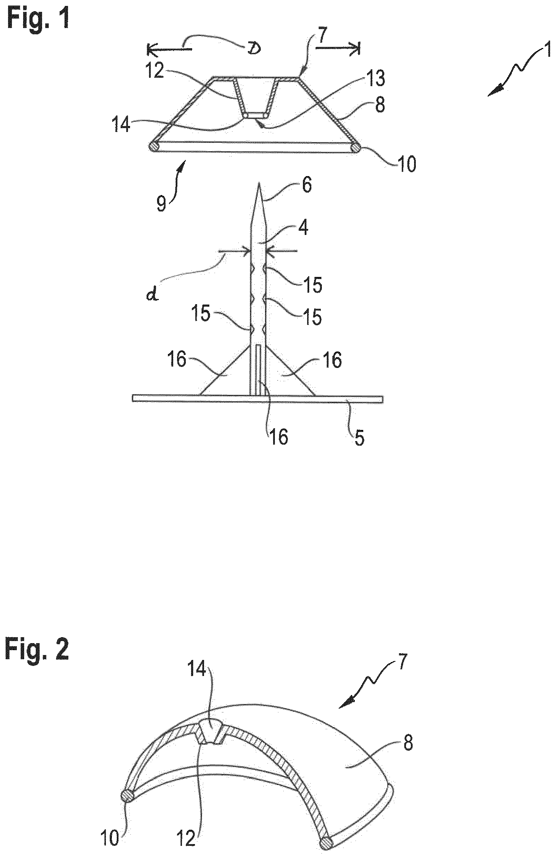

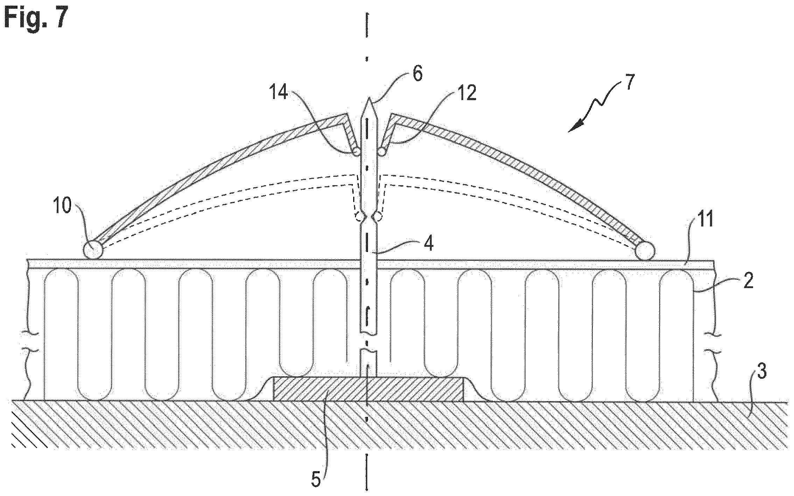

Figure 1 shows a fastening element 1 for supporting and/or fixing insulation elements 2 (figure 7) to the outer surface of a duct 3 (figure 7). The fastening element 1 comprises a pin 4 having a base disk 5 at a first end and a sharp tip 6 at a second end. Furthermore, the fastening element 1 comprises a washer 7 being connectable to the pin 4.

The washer 7 has a housing 8 with a trapezoidal cross section and a first aperture 9 into which a sealing element 10 is inserted. The housing 8 has a base with a diameter D according to the diameter of the sealing element 10 to be inserted.

The sealing element 10 which is inserted into a notch of the housing 8 is a ring seal with a circular cross section and erecting from a lower end of the housing 8 in the direction towards the base disk 5. The sealing element 10 surrounds the whole housing 8 so that the sealing element 10 gets into full contact with the outer surface of the insulation element 2 according to figure 7, namely with the metal foil 11 being fixed to a surface of the insulation element 2.

The washer 7 furthermore comprises a coupling device 12 being shaped as a hollow cylinder which is directed from the upper end of the washer 7 into the direction of the lower end and the sealing element 10 and having an aperture 13 into which the tip 6 of the pin 4 penetrates. Within the aperture 13 a projection 14 is provided which erects into the aperture and which protrudes into an annular groove 15 of the pin 4.

As can be seen from figure 1 the pin 4 has three annular grooves, which are arranged in certain distances from each other so that the protrusion 14 can protrude in one of the annular grooves depending on the thickness of the insulation element 2, which has to be fixed to the duct 3.

The protrusion 14 can be arranged circumferential at the free end of the coupling device 12. Furthermore, the protrusion 14 can be shaped as a sealing element, for example made of a rubber ring. Pin 4, base disk 5 and washer 7 are made from a synthetic polymer material.

Furthermore, it can be seen from figure 1 that the base disk 5 is connected to the pin 4 by four webs 16 having a triangular shape end of which three are shown in figure 1. The webs 16 stabilize the pin 4 to the base disk 5, which is useful especially when the pin 4 has a greater length to be used with thicker insulation elements 2.

Figure 2 shows a further embodiment of the washer 7 having a shape of a spherical segment with the construction elements of the washer according to figure 1.

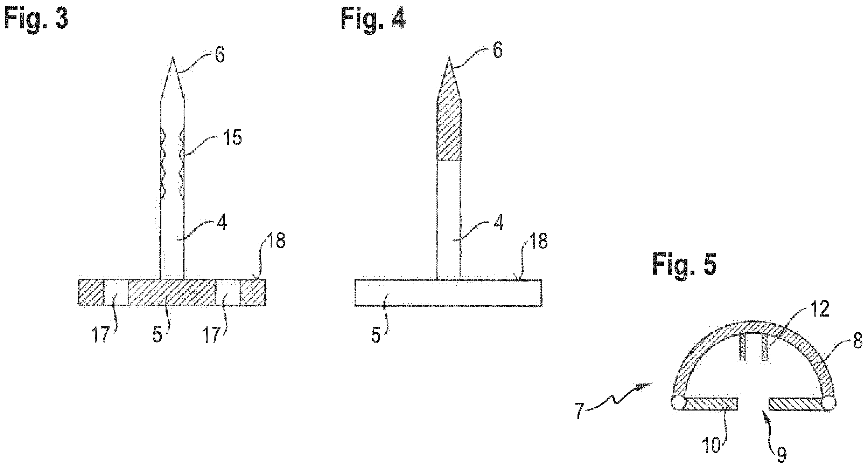

A further embodiment of the washer 7 is shown in figure 5. This embodiment according to figure 5 differs from the before described embodiments in that the sealing element 10 which is formed as a plate with an aperture 9 having a diameter being more or less corresponding to the diameter d (Fig. 1) of the pin 4 so that the sealing element 10 is in contact with the outer surface of the pin 4 thereby sealing the outer surface of the pin 4 within the aperture 9. As can be seen from figure 5 the washer 7 has a coupling device 12, which is arranged inside the housing 8 and aligned to the aperture 9.

Figures 3 and 4 show two embodiments of the pin 4 comprising a base disk 5. Figure 3 shows an embodiment of the base disk 5 having several apertures 17 being aligned to the pin 4 and allowing an adhesive being used to fix the base disk 5 to the outer surface of the duct 3 to run through the apertures so that the adhesive hardens on a surface 18 of the base disk 5 thereby giving more stability of the fixation of the fastening element 1 to the duct 3.

From figure 3 several annular grooves 15 can be seen which are arranged in a way that a sawtooth profile is provided.

Figure 4 shows a further embodiment of a pin 4 with a tip 6 being made of a material like a elastomer, which is deformable when mechanically, physically and/or chemically influenced. The tip 6 is inserted into a coupling device 12 and can be deformed so that a further sealing is provided.

Furthermore, the tip 6 according to the embodiment of figure 4 may comprise a thermal setting resin which can be heated, thereby providing the effect of an adhesive and connecting the washer 7 undetachably with the pin 4.

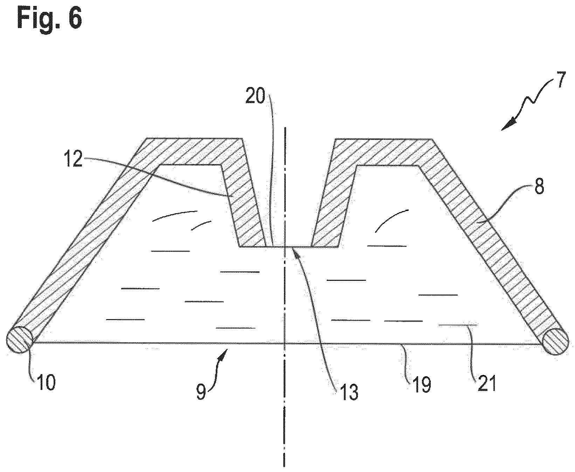

Another embodiment of the washer 7 is shown in figure 6. The embodiment of figure 6 is comparable to the embodiment of figure 1. Additionally, the embodiment of figure 6 comprises a first membrane 19 being arranged in the area of the sealing element 10 thereby closing the housing 8 in the area of the aperture 9. A second membrane 20 closes the aperture 13 at the free end of the coupling device 12.

Between the two membranes 19 and 20 a chamber within the housing 8 is defined which is filled with a paste-like sealant. When the washer 7 is installed on the pin 4 the tip 6 of the pin 4 first penetrates the membrane 19 and subsequently the membrane 20 thereby erecting through the sealant 21. The sealant 21 hardens in the area of the penetration of the pin 4 through both membranes 19, 20 thereby sealing the pin 4 in the aperture 13 and the aperture 9.

A further embodiment of the fastening element 1 according to the invention is shown in figure 7. Figure 7 shows additionally the duct 3 respectively a duct wall and the insulation element 2 together with a metal foil 11 being laminated onto one surface of the insulation element 2.

The base disk 5 of the pin 4 is glued to the outer surface of the duct 3 before the insulation element 2 is slid in lengthwise direction of the pin 4 towards the duct 3, which pin 4 thereby penetrates through the insulation element 2. Finally, the washer 7 is fixed to the pin 4.

The washer 7 according to figure 7 is shaped as a spherical segment made of a flexible elastomeric material having a coupling device 12 into which the tip 6 of the pin 4 is inserted. At the free end of the coupling device 12 the washer 7 is equipped with protrusions 14.

As can be seen from figure 7 the washer 7 is moved from its first position in a second position shown in dashed lines whereby the protrusions 14 are snapped into an annular groove 15 of the pin 4. The washer 7 is equipped with a ring-like sealing element 10 being fixed to the housing 8 of the washer 7. This sealing element 10 is positioned on top of the metal foil 11 of the insulation element 2 and does not allow a movement of the sealing element 10 in radial direction of the washer 7. Therefore, moving the washer 7 into the second position shown in dashed lines has the effect that a high friction force between the washer 7 and the pin 4 is provided.

As can be seen from figure 7 the coupling device 12 is V-shaped in cross section and being mostly in contact with the pin 4 with the protrusions 14. By moving the washer 7 into the second position in dashed lines the sidewalls of the coupling device 12 are nearly moved into total contact with the outer surface of the pin 4.

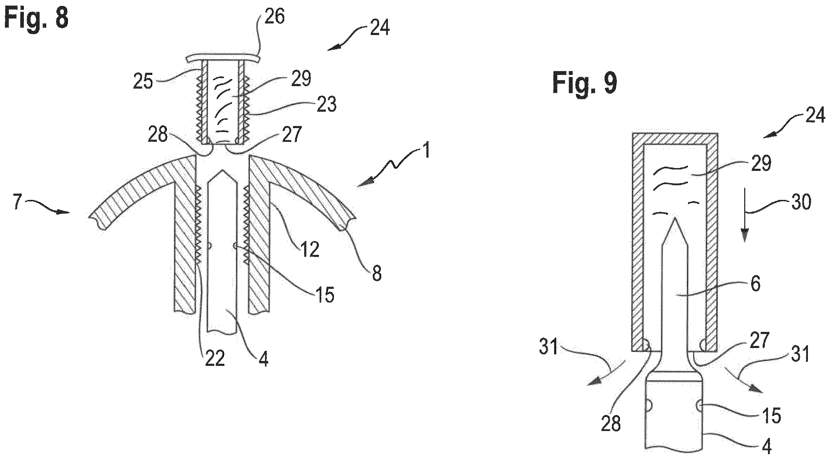

Two further embodiments of the fastening element 1 are shown in figures 8 and 9 whereby these figures only show details of the fastening element 1.

Figure 8 shows the pin 4 and the washer 7.

It can be seen from figure 8 that at the inner sidewall of the coupling device 12 a ratchet 22 is arranged which corresponds with saw-like ratchets 23 at an outer surface of a cap 24 comprising a cylinder 25 and a covering plate 26 closing the hollow cylinder 25 at one end.

At the second end of the hollow cylinder 25 a membrane 27 is arranged between a circumferential protrusion 28. The cylinder 25 is filled with a sealant 29 comparable to the sealant 21.

The cylinder 25 has an outer diameter corresponding to the inner diameter of the coupling device 12 so that the cylinder 25 can be inserted into the coupling device 12 thereby connecting the pin 4 in that the protrusion 28 is catching into the annular groove of the pin 4. In this position the tip 6 of the pin 4 penetrates the membrane 27 and allows the sealant 29 to run into the coupling device 12 thereby sealing the pin 4 within the coupling 12.

Finally, figure 9 shows a further embodiment of the cap 24 and the pin 4. From figure 9 it can be seen that the pin 4 has a smaller diameter in the area of the tip 6 compared to the rest of the pin 4 whereby the cap 24 has an inner diameter being smaller than the outer diameter of the pin 4. By moving the cap 24 in the direction of an arrow 30 the free ends of the cap being made of an elastomeric material are moved in the direction of arrows 31 thereby expanding the opening of the cap 24 sealed with the membrane 27 and thereby allowing to use the sealant 29 as an adhesive to connect the inner wall of the cap 24 to the outer wall of the pin 4.

### Numeral references

- 1: fastening element
- 2: insulation element
- 3: duct
- 4: pin
- 5: base disk
- 6: tip
- 7: washer
- 8: housing
- 9: aperture
- 10: sealing element
- 11: metal foil
- 12: coupling device
- 13: aperture
- 14: protrusion
- 15: annular groove
- 16: web
- 17: aperture
- 18: surface
- 19: membrane
- 20: membrane
- 21: sealant
- 22: ratchet
- 23: ratchet
- 24: cap
- 25: cylinder
- 26: covering plate
- 27: membrane
- 28: protrusion
- 29: sealant
- 30: arrow
- 31: arrow
- D: diameter
- d: diameter

## Claims

1. A fastening element for supporting and/or fixing insulation elements (2), especially made of mineral wool, preferably stone wool, to a ventilation duct (3) or pipe comprising a pin (4) having a base disk (5) at a first end and a tip (6) at a second end and a washer (7) being connectable to the pin (4),
**characterized by**
a sealing element (10) as a ring seal between the washer (7) and a surface of the insulation element (2) and/or between the pin (4) and a surface of the insulation element (2) and/or between the washer (7) and the pin (4) whereby
the washer (7) has a trapezoidal or circular cross section and a first aperture (9), into which the sealing element (10) is inserted.

2. The fastening element according to claim 1,
**characterized in that**
the washer (7) has the shape of a spherical segment or of a truncated cone, whereby the washer (7) is open in the area of the larger diameter of the spherical segment or of the truncated cone.

3. The fastening element according to claim 1 or 2,
**characterized in that**
pin (4) and washer (7) are made of a synthetic polymer material.

4. The fastening element according to one of the claims 1 to 3,
**characterized in that**
the sealing element (10) has an outer shape according to an inner shape of the washer (7) with a central aperture for the pin (4), having a diameter corresponding to a diameter (d) of the pin (4).

5. The fastening element according to one of the claims 1 to 4,
**characterized in that**
the washer (7) has a coupling device, especially a hollow cylinder for the connection with the pin (4).

6. The fastening element according to one of the claims 1 to 5,
**characterized in that**
the washer (7) is closed with a membrane (19, 20) thereby forming a hollow space being filled with a liquid or paste-like sealant (21), whereby the membrane (19, 20) is at least penetrable by the pin (4) and whereby an area of penetration is sealed with the sealant (21) between the membrane (19, 20) and the pin (4).

7. The fastening element according to one of the claims 1 to 6,
**characterized in that**
the pin (4) has a sharp tip (6).

8. The fastening element according to one of the claims 1 to 7,
**characterized in that**
at least the tip (6) of the pin (4) is made of a material, e. g. an elastomer, which is deformable when mechanically, physically and/or chemically influenced.

9. The fastening element according to one of the claims 1 to 8,
**characterized in that**
the pin (4) has at least one annular groove (15).

10. The fastening element according to claim 6,
**characterized in that**
the sealant (21) is a glue or an adhesive, preferably activatable mechanically, physically and/or chemically.

11. The fastening element according to one of the claims 1 to 10,
**characterized in that**
the washer (7) and the sealing element (10) are formed integrally.

12. The fastening element according to one of the claims 1 to 11,
**characterized in that**
additionally a cap (24) is provided which is attached to the tip (6) of the pin (4), thereby connecting the tip (6) of the pin (4) with the washer (7) having an aperture into which the cap (24) is inserted whereby a friction force between an outside of the cap (24) and an inner wall of the aperture is provided.

13. The fastening element according to claim 12,
**characterized in that**
the cap (24) is filled with a glue or an adhesive and sealed by a membrane (27) penetrated by the tip (6) of the pin (4).

## Patentansprüche

1. Befestigungselement zu Stützen und/oder Befestigen von Isolierungselementen (2), insbesondere aus Mineralwolle, vorzugsweise Steinwolle, an einem Lüftungskanal (3) oder einem Rohr, umfassend einen Stift (4) mit einer Basisscheibe (5) an einem freien Ende und einer Spitze (6) an einem zweiten Ende und einer Scheibe (7) die mit dem Stift (4) verbindbar ist,
**gekennzeichnet durch**
ein Dichtungselement (10) als Ringdichtung zwischen der Scheibe (7) und einer Fläche des Isolierelements (2) und/oder zwischen dem Stift (4) und einer Fläche des Isolierelements (2) und/oder zwischen der Scheibe (7) und dem Stift (4),
wobei die Scheibe (7) einen trapezförmigen oder kreisrunden Querschnitt und eine erste Öffnung (9) hat, in welche das Dichtungselement (10) eingesetzt ist.

2. Befestigungselement nach Anspruch 1,
**dadurch gekennzeichnet, dass**
die Scheibe (7) die Form eines kugelförmigen Segments oder eines Kegelstumpfs hat, wobei die Scheibe (7) in dem Bereich des größeren Durchmessers des kegelförmigen Segments oder des Kegelstumpfs offen ist.

3. Befestigungselement nach Anspruch 1 oder 2,
**dadurch gekennzeichnet, dass**
der Stift (4) und die Scheibe (7) aus einem synthetischen Polymermaterial bestehen.

4. Befestigungselement nach einem der Ansprüche 1 bis 3,
**dadurch gekennzeichnet, dass**
das Dichtungselement (10) eine einer inneren Form der Scheibe (7) entsprechende äußere Form mit einer zentralen Öffnung für den Stift (4) aufweist mit einem Durchmesser, der einem Durchmesser (d) des Stifts (4) entspricht.

5. Befestigungselement nach einem der Ansprüche 1 bis 4,
**dadurch gekennzeichnet, dass**
die Scheibe (7) eine Verbindungseinrichtung aufweist, insbesondere einen Hohlzylinder für die Verbindung mit dem Stift (4).

6. Befestigungselement nach einem der Ansprüche 1 bis 5,
**dadurch gekennzeichnet, dass**
die Scheibe (7) mit einer Membrane (19, 20) verschlossen ist, wodurch ein Hohlraum gebildet wird, der mit einem flüssigen oder pastösen Dichtungsmittel (21) gefüllt ist, wobei die Membrane (19, 20) zumindest von dem Stift (4) durchdringbar ist und wobei ein Durchdringungsbereich mit dem Dichtungsmittel (21) zwischen der Membrane (19, 20) und dem Stift (4) abgedichtet ist.

7. Befestigungselement nach einem der Ansprüche 1 bis 6,
**dadurch gekennzeichnet, dass**
der Stift (4) eine scharfe Spitze (6) hat.

8. Befestigungselement nach einem der Ansprüche 1 bis 7,
**dadurch gekennzeichnet, dass**
zumindest die Spitze (6) des Stifts (4) aus einem Material, z.B. einem Elastomer, besteht, das unter einem mechanischen, physikalischen und/oder chemischen Einfluss verformbar ist.

9. Befestigungselement nach einem der Ansprüche 1 bis 8,
**dadurch gekennzeichnet, dass**
der Stift (4) zumindest eine Ringnut (15) aufweist.

10. Befestigungselement nach Anspruch 6,
**dadurch gekennzeichnet,**
**dass** das Dichtungsmittel (21) ein Klebstoff oder ein Haftmittel ist, vorzugsweise mechanisch, physikalisch und/oder chemisch aktivierbar.

11. Befestigungsmittel nach einem der Ansprüche 1 bis 10,
**dadurch gekennzeichnet, dass**
die Scheibe (7) und das Dichtungselement (10) einstückig ausgebildet sind.

12. Befestigungselement nach einem der Ansprüche 1 bis 11,
**dadurch gekennzeichnet, dass**
zusätzlich eine Kappe (24) vorgesehen ist, die an der Spitze (6) des Stifts (4) angebracht ist und dadurch die Spitze (6) des Stifts (4) mit der Scheibe (7) verbindet, die eine Öffnung hat, in welche die Kappe (24) eingesetzt ist, wobei ein Reibkraft zwischen einer Außenseite der Kappe (24) und einer Innenwand der Öffnung bereitgestellt wird.

13. Befestigungselement nach Anspruch 12,
**dadurch gekennzeichnet, dass**
die Kappe (24) mit einem Klebstoff oder einem Haftmittel gefüllt und durch eine Membrane (27) verschlossen ist, die von der Spitze (6) des Stifts (4) durchdrungen wird.

## Revendications

1. Élément de fixation pour supporter et/ou fixer des éléments d'isolation (2), en particulier en laine minérale, de préférence en laine de roche, à un conduit de ventilation (3) ou à un tuyau, comprenant une goupille (4) avec une rondelle de base (5) à une extrémité libre et une pointe (6) à une seconde extrémité et une rondelle (7) qui peut être reliée à la goupille (4),
**caractérisé par**
un élément d'étanchéité (10) sous forme de joint annulaire entre la rondelle (7) et une surface de l'élément isolant (2) et/ou entre la goupille (4) et une surface de l'élément isolant (2) et/ou entre la rondelle (7) et la goupille,
la rondelle (7) ayant une section trapézoïdale ou circulaire et une première ouverture (9) dans laquelle l'élément d'étanchéité (10) est inséré.

2. Élément de fixation selon la revendication 1,
**caractérisé en ce que**
la rondelle (7) a la forme d'un segment sphérique ou d'un cône tronqué, la rondelle (7) étant ouverte dans la zone du plus grand diamètre du segment conique ou du cône tronqué.

3. Élément de fixation selon la revendication 1 ou 2,
**caractérisé en ce que**
le goupille (4) et la rondelle (7) sont constituées d'un matériau polymère synthétique.

4. Élément de fixation selon l'une des revendications 1 à 3,
**caractérisé en ce que**
l'élément d'étanchéité (10) présente une forme extérieure correspondant à une forme intérieure de la rondelle (7) avec une ouverture centrale pour la goupille (4) ayant un diamètre correspondant à un diamètre (d) de la goupille (4).

5. Élément de fixation selon l'une quelconque des revendications 1 à 4,
**caractérisé en ce que**
la rondelle (7) comporte un dispositif de liaison, notamment un cylindre creux pour la liaison avec la goupille (4).

6. Élément de fixation selon l'une des revendications 1 à 5,
**caractérisé en ce que**
la rondelle (7) est fermée par une membrane (19, 20), formant ainsi une cavité remplie d'un produit d'étanchéité (21) liquide ou pâteux, la membrane (19, 20) pouvant être traversée au moins par la goupille (4) et une zone de pénétration étant rendue étanche par le produit d'étanchéité (21) entre la membrane (19, 20) et la goupille (4).

7. Élément de fixation selon l'une quelconque des revendications 1 à 6,
**caractérisé en ce que**
la goupille (4) a une pointe acérée (6).

8. Élément de fixation selon l'une des revendications 1 à 7,
**caractérisé en ce que**
au moins la pointe (6) de la goupille (4) est constituée d'un matériau, par exemple un élastomère, qui est déformable sous l'influence mécanique, physique et/ou chimique.

9. Élément de fixation selon l'une quelconque des revendications 1 à 8,
**caractérisé en ce que**
la goupille (4) présente au moins une rainure annulaire (15).

10. Élément de fixation selon la revendication 6,
**caractérisé en ce que**
le moyen d'étanchéité (21) est une colle ou un agent adhésif, de préférence activable mécaniquement, physiquement et/ou chimiquement.

11. Élément de fixation selon l'une quelconque des revendications 1 à 10,
**caractérisé en ce que**
la rondelle (7) et l'élément d'étanchéité (10) sont formés en une seule pièce.

12. Élément de fixation selon l'une des revendications 1 à 11,
**caractérisé en ce que**
il est prévu en outre un capuchon (24) qui est fixé à la pointe (6) de la goupille (4) et qui relie ainsi la pointe (6) de la goupille (4) à la rondelle (7) qui présente une ouverture dans laquelle le capuchon (24) est inséré, une force de frottement étant fournie entre un côté extérieur du capuchon (24) et une paroi intérieure de l'ouverture.

13. Élément de fixation selon la revendication 12,
**caractérisé en ce que**
le capuchon (24) est rempli d'une colle ou d'un agent adhésif et est fermé par une membrane (27) qui est pénétrée par l'extrémité (6) de la goupille (4).
